# EUROPEAN PATENT APPLICATION

(11) **EP 3 101 591 A1**
(43) Date of publication of application: **07.12.2016**
(21) Application number: 16172501.5
(22) Date of filing: 01.06.2016
(51) Int. Cl.: G06K 9/00

(54) **TERMINAL FOR RECOGNIZING FINGERPRINT**

(30) Priority: 03.06.2015 CN 201510301029
(71) Applicant: Xiaomi Inc., Beijing 100085 (CN)
(72) Inventor: JIANG, Zhongsheng, 100085 Haidian District (CN); LI, Guosheng, 100085 Haidian District (CN); LIU, Anyu, 100085 Haidian District (CN)
(74) Representative: Robson, Aidan John

(57) **Abstract**

. A terminal includes a fingerprint reader (1), a processor (2), a main body (3) and a plurality of fingerprint detection units (4), wherein the plurality of fingerprint detection units (4) is distributed between a screen panel (5) of the main body (3) and the screen; the fingerprint reader (1) is disposed inside the main body (3), electrically connected to the plurality of fingerprint detection units (4) respectively and electrically connected to the processor (2), and configured to acquire detection signals from the fingerprint detection units (4), generate fingerprint data according to the detection signals from the fingerprint detection units (4) and send them to the processor (2); and the processor (2) is disposed inside the main body (3), and configured to compare the fingerprint data with previously stored reference fingerprint data, and perform a preset control command if the fingerprint data matches with the reference fingerprint data.

## Description

### TECHNICAL FIELD

The present disclosure generally relates to the field of computer technology, and more particularly, to a terminal for recognizing a fingerprint.

### BACKGROUND

With the development of mobile terminal technology, mobile terminals have found widespread usage, and have become indispensible tools in daily lives. In order to guarantee security of user information in usage of a mobile terminal, the mobile terminal can be provided with a fingerprint recognizing function, applied in operations with relatively high security requirements such as unlocking the mobile terminal or paying online.

Typically, the mobile terminal detects an image of a fingerprint through a fingerprint detector. In this regard, a corresponding detection hole is provided at a position corresponding to the fingerprint detector on the screen panel. A user can cover the detection hole with his finger, to contact the detection terminal of the fingerprint detector. Then the fingerprint detector can generate image data of the fingerprint according to the detected detection signal for the mobile terminal to recognize the fingerprint.

During the realization of the present disclosure, at least the following problems are found existing in the related art:

providing a corresponding detection hole at a position corresponding to the fingerprint detector on the panel of the mobile terminal can damage the strength of the panel, and as a result, the panel tends to be broken.

### SUMMARY

In order to overcome the problem in the related art, the present disclosure provides a terminal for recognizing a fingerprint. The technical solutions are as follows:

According to a first aspect of embodiments of the present disclosure, there is provided a terminal for recognizing a fingerprint, including a fingerprint reader, a processor, a main body and a plurality of fingerprint detection units, wherein
the plurality of fingerprint detection units is distributed between a screen panel of the main body and the screen;
the fingerprint reader is disposed inside the main body, electrically connected to the plurality of fingerprint detection units respectively and electrically connected to the processor, and configured to acquire detection signals from the fingerprint detection units, generate fingerprint data according to the detection signals from the fingerprint detection units and send them to the processor; and
the processor is disposed inside the main body, and configured to compare the fingerprint data with previously stored reference fingerprint data, and perform a preset control command if the fingerprint data matches with the reference fingerprint data.

Optionally, the fingerprint reader is configured to
acquire capacitance values detected by the fingerprint detection units, and generate fingerprint data according to the capacitance values detected by the fingerprint detection units.

Optionally, the plurality of fingerprint detection units is distributed between the screen panel of the main body and the screen in a form of a dot array.

Optionally, each of the fingerprint detection units is of a strip shape, and the plurality of strip-shaped fingerprint detection units is distributed between the screen panel of the main body and the screen in a crisscross form.

Optionally, a transparent film is disposed between the screen panel of the main body and the screen, and the plurality of fingerprint detection units is distributed on the transparent film.

Optionally, the plurality of fingerprint detection units is made of one or more of the following materials: nanosilver, carbon nanotubes and graphene.

Optionally, the terminal further includes a switch circuit electrically connected to the plurality of fingerprint detection units and the fingerprint reader.

Optionally, the fingerprint reader is further configured to
send to the switch circuit an instruction for acquiring detection signals; and
the switch circuit is configured to
at each time it receives an instruction for acquiring detection signals, acquire detection signals from one of the fingerprint detection units in accordance with a preset order, and send the acquired detection signals to the fingerprint reader.

Optionally, the switch circuit is a thin film transistor TFT switch circuit.

Optionally, the switch circuit is an automatic counting switch circuit.

The advantageous effects brought by the technical solutions according to the embodiments of the present disclosure may include:

In the embodiment of the present disclosure, the terminal includes a fingerprint reader, a processor, a main body and a plurality of fingerprint detection units. Specifically, the plurality of fingerprint detection units is distributed between a screen panel of the main body and the screen; the fingerprint reader is disposed inside the main body, electrically connected to the fingerprint detection units respectively and electrically connected to the processor, and configured to acquire detection signals from the fingerprint detection units, generate fingerprint data according to the detection signals from the fingerprint detection units and send them to the processor; and the processor is disposed inside the main body, and configured to compare the fingerprint data with previously stored reference fingerprint data, and perform a preset control command if the fingerprint data matches with the reference fingerprint data. Thereby, the terminal can recognize a fingerprint according to the detection signals from the fingerprint detection units disposed between the screen panel and the screen, and it can eliminate the need to provide a detection hole on the screen panel. Therefore, the strength of the screen panel can be enhanced.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic view of a mobile terminal according to an exemplary embodiment;
Fig. 2 is a schematic view of a mobile terminal according to an exemplary embodiment;
Fig. 3 is a schematic view of a mobile terminal according to an exemplary embodiment; and
Fig. 4 is a schematic view of a mobile terminal according to an exemplary embodiment.

Through the above accompanying drawings, the specific embodiments of the disclosure have been shown, for which a more detailed description will be given as below. These drawings and textual description are not intended to limit the scope of the concept of the disclosure in any manner, but to explain the concept of the disclosure to those skilled in the art through particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

### First Embodiment

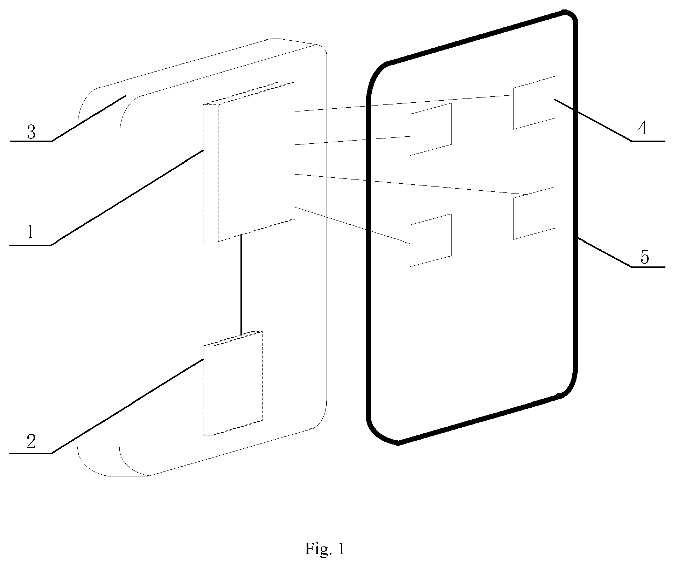

An embodiment of the present disclosure provides a terminal for recognizing a fingerprint. As shown in Fig. 1, the terminal includes a fingerprint reader 1, a processor 2, a main body 3 and a plurality of fingerprint detection units 4.

The terminal has a touch sensitive screen. This may be a Glass Film Film (GFF) solution or a One Glass Solution (OGS). In the GFF solution two layers of conducting films are distributed under the cover glass (CG) of the screen. The lower layer is connected with the LCD screen via Liquid Optical Clear Adhesive and the fingerprint detection units can be distributed between the upper layer and the lower layer conducting films or between the upper layer conducting film and the cover glass. In an embodiment using the one glass solution the fingerprint detection units can be adhered to the lower surface of the cover glass and then the cover glass connected with the LCD screen using Liquid Optical Clear Adhesive.

Specifically, the plurality of fingerprint detection units 4 is distributed between a screen panel 5 of the main body 3 and the screen; the fingerprint reader 1 is disposed inside the main body 3, electrically connected to the fingerprint detection units 4 respectively and electrically connected to the processor 2, and configured to acquire detection signals from the fingerprint detection units 4, generate fingerprint data according to the detection signals from the fingerprint detection units 4 and send them to the processor 2; and the processor 2 is disposed inside the main body 3, and configured to compare the fingerprint data with previously stored reference fingerprint data, and perform a preset control command if the fingerprint data matches with the reference fingerprint data.

In the embodiment of the present disclosure, the terminal includes a fingerprint reader, a processor, a main body and a plurality of fingerprint detection units. Specifically, the plurality of fingerprint detection units is distributed between a screen panel of the main body and the screen; the fingerprint reader is disposed inside the main body, electrically connected to the fingerprint detection units respectively and electrically connected to the processor, and configured to acquire detection signals from the fingerprint detection units, generate fingerprint data according to the detection signals from the fingerprint detection units and send them to the processor; and the processor is disposed inside the main body, and configured to compare the fingerprint data with previously stored reference fingerprint data, and perform a preset control command if the fingerprint data matches with the reference fingerprint data. Thereby, the terminal can recognize a fingerprint according to the detection signals from the fingerprint detection units disposed between the screen panel and the screen, and it can eliminate the need to provide a detection hole on the screen panel. Therefore, the strength of the screen panel can be enhanced.

### Second Embodiment

An embodiment of the present disclosure provides a terminal for recognizing a fingerprint. The terminal includes a fingerprint reader 1, a processor 2, a main body 3 and a plurality of fingerprint detection units 4. Specifically, the plurality of fingerprint detection units 4 is distributed between a screen panel 5 of the main body 3 and the screen; the fingerprint reader 1 is disposed inside the main body 3, electrically connected to the fingerprint detection units 4 respectively and electrically connected to the processor 2, and configured to acquire detection signals from the fingerprint detection units 4, generate fingerprint data according to the detection signals from the fingerprint detection units 4 and send them to the processor 2; and the processor 2 is disposed inside the main body 3, and configured to compare the fingerprint data with previously stored reference fingerprint data, and perform a preset control command if the fingerprint data matches with the reference fingerprint data.

In an embodiment, the terminal can include a fingerprint reader 1, a processor 2, a main body 3 and a plurality of fingerprint detection units 4. The fingerprint detection units 4 can be made of one or more of the following material: nanosilver, carbon nanotubes and graphene, or can include copper wire. Metal wires of nanoscale can be made of the above materials and distributed between the screen panel 5 of the main body 3 and the screen. For example, the fingerprint detection units 4 can be directly disposed between the screen panel 5 and the screen and arranged according to a certain pattern. The screen panel 5 of the terminal can be a flat structure without any hole. Thereby, the strength of the panel can be enhanced, and it can prevent the screen panel from being broken when the terminal falls off. The fingerprint reader 1 can be disposed inside the main body 3, electrically connected to the fingerprint detection units 4 between the screen panel 5 and the screen respectively and electrically connected to the processor 2. The processor 2 can be disposed between the main body 3 and the screen. The fingerprint reader 1 can be provided with a signal filtering system, an amplifier circuit, an Analog Digital (AD) sampling module or the like, to filter and amplify the detection signals from the fingerprint detection units 4. Then the fingerprint reader 1 generates fingerprint data according to the detection signals from the fingerprint detection units 4 and sends them to the processor 2.

Reference fingerprint data can be previously stored in the processor 2. The reference fingerprint data can be an average value of fingerprint data of a user which are detected at multiple times. The user can click a fingerprint setting option in a fingerprint setting page of the terminal. The terminal then receives a fingerprint setting instruction, and then the fingerprint reader 1 of the terminal can acquire the detection signals from the fingerprint detection units 4, generate fingerprint data, and send the fingerprint data to the processor 2. The processor 2 can store the received fingerprint data. As such, the terminal can detect the fingerprint of the user for multiple times, and send the detected fingerprint data to the processor 2. After it receives these fingerprint data, the processor 2 can determine an average value of these fingerprint data as the reference fingerprint data.

After it receives fingerprint data sent by the fingerprint reader, the processor 2 can compare the received fingerprint data with the previously stored reference fingerprint data, to determine similarity between the received fingerprint data and the reference fingerprint data. If the similarity between the received fingerprint data and the reference fingerprint data is within a preset range of similarity, a preset control command can be performed. After it determines that the similarity between the received fingerprint data and the reference fingerprint data is within a preset range of similarity, the processor 2 can detect a current display state of the interface of the terminal, and perform a control command based on the current display state of the interface of the terminal. For example, after it determines that the similarity between the received fingerprint data and the reference fingerprint data is within a preset range of similarity, if it detects that the current display state of the interface of the terminal is a to-be-unlocked state, the processor 2 can perform an unlocking operation, and if it detects that the current display state of the interface of the terminal is a to-be-paid state, the processor 2 can perform a paying operation.

Optionally, the fingerprint reader 1 can acquire capacitance values detected by the fingerprint detection units 4, and generate fingerprint data according to the capacitance values detected by the fingerprint detection units 4.

In an embodiment, a convex portion of a fingerprint can be referred to as a ridge, and a concave portion of a fingerprint can be referred to as a valley. When the user touches the screen with his finger, a distance from a ridge to the fingerprint detection units 4 is different from a distance from a valley to the fingerprint detection units 4. Since the capacitance values detected by the fingerprint detection units 4 are relevant to the distances from the detected objects to the fingerprint detection units 4, the fingerprint detection units 4 covered by the finger will generate capacitance values in ridges different from those in valleys. The fingerprint reader 1 can acquire capacitance values detected by all of the fingerprint detection units 4 between the screen panel 5 and the screen, then generate fingerprint data according to the capacitance values detected by the fingerprint detection units 4, and send the generated fingerprint data to the processor 2. After it receives the fingerprint data sent by the fingerprint reader, the processor 2 can compare the received fingerprint data with the previously stored reference fingerprint data, to determine similarity between the received fingerprint data and the reference fingerprint data. If the similarity between the received fingerprint data and the reference fingerprint data is within a preset range of similarity, a preset control command can be performed. After it determines that the similarity between the received fingerprint data and the reference fingerprint data is within a preset range of similarity, the processor 2 can detect a current display state of the interface of the terminal, and perform a control command based on the current display state of the interface of the terminal.

Optionally, the plurality of fingerprint detection units 4 is distributed between the screen panel 5 of the main body 3 and the screen in a form of a preset array.

In practice, the plurality of fingerprint detection units 4 can be evenly distributed between the screen panel 5 of the main body 3 and the screen in a form of a preset array, and a total detection area corresponding the fingerprint detection units 4 can cover the entire screen, such that when the user touches any portion of the screen with his finger, the terminal can recognize the fingerprint to perform a preset control command. The fingerprint detection units 4 can be distributed between the screen panel 5 of the main body 3 and the screen in various forms, and two feasible distribution forms are described as follows.

In a first form, the plurality of fingerprint detection units 4 is distributed between the screen panel 5 of the main body 3 and the screen in a form of a dot array.

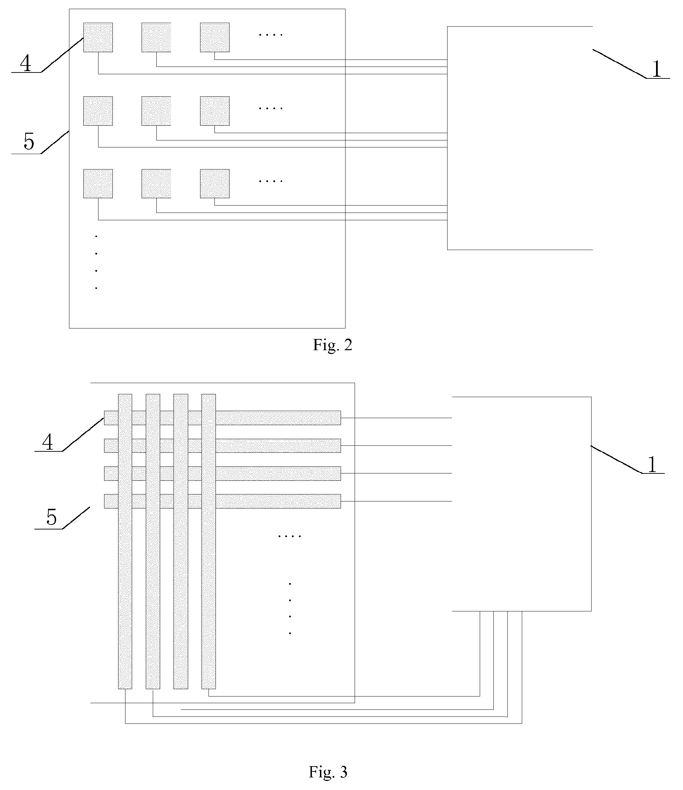

In an embodiment, each of the fingerprint detection units 4 can be a dot-shaped fingerprint detection unit 4. For example, the fingerprint detection unit 4 can be designed of a round dot shape or a square dot shape, and the fingerprint detection units 4 are evenly distributed between the screen panel 5 of the main body 3 and the screen in a form of a dot array, that is, distributed with a fixed row interval and a fixed column interval, as shown in Fig. 2. When the user touches the screen with his finger, the dot-shaped fingerprint detection units 4 covered by the finger can send the detected capacitance values to the fingerprint reader 1, for subsequent procedures.

In a second form, each of the fingerprint detection units 4 is of a strip shape, and the strip-shaped fingerprint detection units 4 are distributed between the screen panel 5 of the main body 3 and the screen in a crisscross form.

In an embodiment, each of the fingerprint detection units 4 can be of a strip shape, and the plurality of strip-shaped fingerprint detection units 4 is evenly distributed between the screen panel 5 of the main body 3 and the screen in a crisscross form, as shown in Fig. 3. When the user touches the screen with his finger, fingerprint detection units 4 can send to the fingerprint reader 1 capacitance values detected at crossing junctions, for subsequent procedures.

Optionally, a transparent film is disposed between the screen panel 5 of the main body 3 and the screen, and the plurality of fingerprint detection units 4 is distributed on the transparent film.

In an embodiment, a transparent film can be disposed between the screen panel 5 of the main body 3 and the screen, and the plurality of fingerprint detection units 4 can be distributed on the transparent film. Since the transparent film can be at a low cost, it can effectively prevent waste in screen panel 5 due to mistake assembly of the fingerprint detection units 4 during production, and therefore, it can improve utilization of resources.

Optionally, the terminal further includes a switch circuit 6 electrically connected to the plurality of fingerprint detection units 4 and to the fingerprint reader 1.

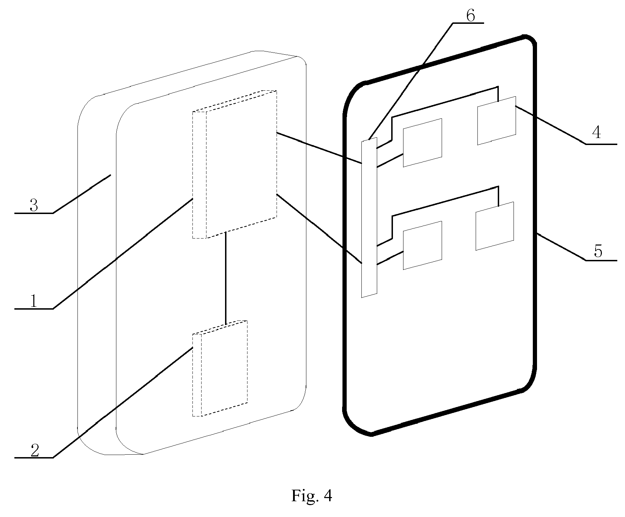

In an embodiment, as shown in Fig. 4, the terminal can be provided with a switch circuit 6. The switch circuit 6 can be provided between the screen panel 5 of the terminal and the screen, or can be provided on a transparent film. The switch circuit 6 can be electrically connected to the plurality of fingerprint detection units 4 and to the fingerprint reader 1. The terminal can be provided with one switch circuit 6, or can be provided with a plurality of switch circuits 6. In case where the terminal is provided with one switch circuit 6, the switch circuit 6 can be connected to all of the fingerprint detection units 4. In case where the terminal is provided with a plurality of switch circuits 6, each of the plurality of switch circuits 6 can be connected to a corresponding fingerprint detection unit 4.

Optionally, the fingerprint reader 1 is further configured to send to the switch circuit 6 an instruction for acquiring detection signals; and the switch circuit 6 is configured to, at each time it receives an instruction for acquiring detection signals, acquire detection signals from one of the fingerprint detection units 4 in accordance with a preset order, and send the acquired detection signals to the fingerprint reader 1.

In an embodiment, the fingerprint reader 1 can send to the switch circuit 6 an instruction for acquiring detection signals at a preset time interval, and the switch circuit 6 can receive the instruction for acquiring detection signals. The switch circuit 6 can be an automatic counting switch circuit. Thus, the switch circuit 6 can count a number of the received instructions for acquiring detection signals. Each time it receives an instruction for acquiring detection signals, the switch circuit 6 can, based on the number of the received instructions for acquiring detection signals, acquire detection signals from one of the fingerprint detection units 4 in accordance with a preset order, and send the acquired detection signals to the fingerprint reader 1. For example, when it receives a first instruction for acquiring detection signals, the switch circuit 6 can acquire a capacitance value from a first fingerprint detection unit 4; and when it receives a second instruction for acquiring detection signals, the switch circuit 6 can acquire a capacitance value from a second fingerprint detection unit 4; and so on, so forth. After it acquires detection signals from the fingerprint detection units 4, the switch circuit 6 can send the acquired detection signals to the fingerprint reader 1, for subsequent procedures.

Optionally, the switch circuit 6 is a thin film transistor TFT switch circuit.

In an embodiment, the switch circuit 6 can be made from a thin film transistor (TFT) process, to form a group or a plurality of groups of switch circuits 6. For example, the switch circuit 6 can be made from a single pixel control process for a TFT liquid crystal display (LCD). Since a switch circuit 6 made from a TFT process can have a small volume, the width of the frame can be reduced, and the external appearance of the terminal can be optimized.

In the embodiment of the present disclosure, the terminal includes a fingerprint reader, a processor, a main body and a plurality of fingerprint detection units. Specifically, the plurality of fingerprint detection units is distributed between a screen panel of the main body and the screen; the fingerprint reader is disposed inside the main body, electrically connected to the fingerprint detection units respectively and electrically connected to the processor, and configured to acquire detection signals from the fingerprint detection units, generate fingerprint data according to the detection signals from the fingerprint detection units and send them to the processor; and the processor is disposed inside the main body, and configured to compare the fingerprint data with previously stored reference fingerprint data, and perform a preset control command if the fingerprint data matches with the reference fingerprint data. Thereby, the terminal can recognize a fingerprint according to the detection signals from the fingerprint detection units disposed between the screen panel and the screen, and it can eliminate the need to provide a detection hole on the screen panel. Therefore, the strength of the screen panel can be enhanced.

## Claims

1. A terminal for recognizing a fingerprint, **characterized in that** the terminal comprises a fingerprint reader (1), a processor (2), a main body (3) and a plurality of fingerprint detection units (4), wherein
the plurality of fingerprint detection units (4) is distributed between a screen panel (5) of the main body (3) and the screen;
the fingerprint reader (1) is disposed inside the main body (3), electrically connected to the plurality of fingerprint detection units (4) respectively and electrically connected to the processor (2), and configured to acquire detection signals from the fingerprint detection units (4), generate fingerprint data according to the detection signals from the fingerprint detection units (4) and send them to the processor (2); and
the processor (2) is disposed inside the main body (3), and configured to compare the fingerprint data with previously stored reference fingerprint data, and perform a preset control command if the fingerprint data matches with the reference fingerprint data.

2. The terminal according to claim 1, wherein the fingerprint reader (1) is configured to acquire capacitance values detected by the fingerprint detection units (4), and generate fingerprint data according to the capacitance values detected by the fingerprint detection units (4).

3. The terminal according to claim 1, wherein the plurality of fingerprint detection units (4) is distributed between the screen panel (5) of the main body (3) and the screen in a form of a dot array.

4. The terminal according to claim 1, wherein each of the fingerprint detection units (4) is of a strip shape, and the plurality of strip-shaped fingerprint detection units (4) is distributed between the screen panel (5) of the main body (3) and the screen in a crisscross form.

5. The terminal according to claim 1, wherein a transparent film is disposed between the screen panel (5) of the main body (3) and the screen, and the plurality of fingerprint detection units (4) is distributed on the transparent film.

6. The terminal according to claim 1, wherein the plurality of fingerprint detection units (4) is made of one or more of the following materials: nanosilver, carbon nanotubes and graphene.

7. The terminal according to claim 1, wherein the terminal further comprises a switch circuit (6) electrically connected to the plurality of fingerprint detection units (4) and the fingerprint reader (1).

8. The terminal according to claim 7, wherein the fingerprint reader (1) is further configured to
send to the switch circuit (6) an instruction for acquiring detection signals; and
the switch circuit (6) is configured to
at each time it receives an instruction for acquiring detection signals, acquire detection signals from one of the fingerprint detection units (4) in accordance with a preset order, and send the acquired detection signals to the fingerprint reader (1).

9. The terminal according to claim 7, wherein the switch circuit (6) is a thin film transistor TFT switch circuit.

10. The terminal according to claim 7, wherein the switch circuit (6) is an automatic counting switch circuit.
